## Europäisches Patentamt

## European Patent Office

## Office européen des brevets

(11) Veröffentlichungsnummer: **0 039 825**
**B1**

(12) **EUROPÄISCHE PATENTSCHRIFT**

(45) Veröffentlichungstag der Patentschrift:
**27.12.84**

(51) Int. Cl.³: **G 01 N 21/07**

(21) Anmeldenummer: **81103201.0**

(22) Anmeldetag: **29.04.81**

(54) **Küvetten-Rotor für Analysengerät und Verfahren zum Betrieb des Küvetten-Rotors.**

(30) Priorität: **05.05.80 CH 3485/80**
**13.03.81 CH 1735/81**

(43) Veröffentlichungstag der Anmeldung:
**18.11.81 Patentblatt 81/46**

(45) Bekanntmachung des Hinweises auf die Patenterteilung:
**27.12.84 Patentblatt 84/52**

(84) Benannte Vertragsstaaten:
**AT BE CH DE GB IT LI NL SE**

(56) Entgegenhaltungen:
**FR - A - 2 238 929**
**FR - A - 2 400 700**
**US - A - 3 547 547**
**US - A - 3 744 975**
**US - A - 3 899 296**
**US - A - 3 901 658**

(73) Patentinhaber: **F. HOFFMANN-LA ROCHE & CO.**
**Aktiengesellschaft, CH-4002 Basel (CH)**

(72) Erfinder: **Revillet, Georges, 20 Chemin François Chavaz,**
**CH-1213 Onex (CH)**
Erfinder: **Thévoz, Michel, 26 Chemin de Brandards,**
**CH-2006 Neuchâtel (CH)**

(74) Vertreter: **Wuesthoff, Franz, Dr.-Ing. et al, Patentanwälte**
**Wuesthoff -v. Pechmann-Behrens-Goetz**
**Schweigerstrasse 2, D-8000 München 90 (DE)**

## Beschreibung

Die Erfindung betrifft einen Küvetten-Rotor für ein Analysengerät, der eine zentrale Verteilungskammer, eine Vielzahl von an seiner Peripherie kreisförmig angeordneten Analysenküvetten, pro Analysenküvette je einen Abmessraum, der zwischen dem äusseren Rand der Verteilungskammer und der ihm zugeordneten Küvette liegt und einen Eingang hat, der ihn mit der Verteilungskammer verbindet und einen Ausgang hat, der ihn mit der ihm zugeordneten Küvette durch einen Übertragungsdurchgang verbindet, und mindestens eine Überlaufkammer besitzt, die mit der Verteilungskammer durch mindestens einen Verbindungsweg verbunden ist, wobei der Eingang jedes Abmessraumes einen hydraulischen Widerstand aufweist, der kleiner als der hydraulische Widerstand des Verbindungsweges ist, sowie ein Verfahren zum Betrieb des Küvetten-Rotors.

Da in der klinischen Chemie die Analysen mit sehr kleinen Probenmengen durchgeführt werden, hängt die Genauigkeit der Messergebnisse im hohen Masse von der Genauigkeit der Proben- bzw. Reagenzien-Mengen ab. Die Genauigkeit dieser Mengen hängt ihrerseits von der Genauigkeit der Pipetten und ist besonders schwierig zu gewährleisten, wenn die zu pipettierenden Mengen sehr klein sind. Dies hat zur Entwicklung von Pipetten hoher Genauigkeit geführt, deren Preis dementsprechend hoch ist. Die mit einer solchen Pipette durchgeführte Pipettierung muss ausserdem für jede einzelne Probe und für jede Reagenzmenge durchgeführt werden, so dass die Vorbereitung einer Reihe von Analysen, die auf ein Rotor eines zentrifugalen Analysengeräts durchgeführt werden, in der Regel längere Zeit in Anspruch nimmt als die Durchführung der Analyse selbst.

Ebenfalls sehr wichtig für die Genauigkeit der Analyse ist eine genaue Bestimmung des Zeitpunkts, in dem die Reaktion beginnt, d.h. des Zeitpunkts, in dem die Probe und das Reagenz in Kontakt treten. Aus diesem Grunde sind die Küvetten an der Peripherie des Rotors angeordnet, der Ladekammern für die Proben bzw. die Reagenzien enthält, welche Kammern mit den ihnen zugeordneten Küvetten verbunden sind, so dass bei Drehung des Rotors die dadurch entwickelte Zentrifugalkraft gleichzeitig den Inhalt aller Ladekammern in die entsprechenden Küvetten befördert.

Es wurde bereits vorgeschlagen (US-A 3 873 217), eine gleichzeitige Abmessung und Verteilung einer Vielzahl von Flüssigkeitsmengen in Küvetten vorzunehmen, die an der Peripherie eines Analysenrotors angeordnet sind. Nach diesem Vorschlag wird bei Drehung des Rotors ein in eine zentrale Kammer desselben eingeführtes Flüssigkeitsvolumen durch Kanten geteilt, die in gleichmässigem Abstand zueinander an der Peripherie dieser Kammer angeordnet sind, wobei jede Kante zu einer Trennwand zwischen benachbarten Analyseneinheiten gehört. Durch Rotation des Rotors gelangen die durch diese Teilung abgemessenen Flüssigkeitsmengen in die Analyseneinheiten des Rotors. Einer solchen Abmessung der Flüssigkeitsmengen, die in die Analyseneinheiten gelangen, fehlt es an Genauigkeit und ist insbesondere von der in die zentrale Kammer eingeführten Flüssigkeitsmenge abhängig, so dass eine genaue Abmessung dieser Menge notwendig ist.

Es ist ferner ein Küvetten-Rotor der eingangs genannten Art bekannt (US-A 3 744 975 und US-A 3 901 658), mit dem die Abmessung der Flüssigkeitsmengen nach dem obigen Vorschlag unter Verwendung einer Überlaufkammer durchgeführt wird. Die gleichzeitige Verteilung der abgemessenen Flüssigkeitsmengen in die Analysenküvetten wird dabei mittels Luftdruck vorgenommen. Dies gewährt jedoch keine hohe Genauigkeit der Flüssigkeitsmengen, die in die Küvetten gelangen.

Der vorliegenden Erfindung liegt die Aufgabe zugrunde, die oben angeführten Nachteile zu beheben, indem sie eine hochgenaue Dosierung der Flüssigkeitsmengen und ihre gleichzeitige Verteilung ermöglicht, und dies alles mittels einer Vorrichtung, die eine einfache Struktur aufweist und in grossen Serien zu einem annehmbaren Preis hergestellt werden kann.

Der erfindungsgemässe Küvetten-Rotor ist dadurch gekennzeichnet, dass die Übertragungsdurchgänge, die Küvetten und der mindestens eine Verbindungsweg so ausgebildet sind, dass das Einströmen von Flüssigkeit in die Küvetten erst dann möglich wird, wenn die bei Rotation des Rotors auf die Flüssigkeit einwirkende Zentrifugalkraft grösser als ein vorgegebener Schwellenwert ist.

Gegenstand der Erfindung ist ferner ein Verfahren zum Betrieb des soeben definierten Küvetten-Rotors, bei welchem Verfahren eine bestimmte Flüssigkeitsmenge, die grösser als das Gesamtvolumen aller Abmessräume ist, in die Verteilungskammer eingeführt wird und die Drehgeschwindigkeit des Rotors auf einen ersten Wert gebracht wird, bei der der Flüssigkeit eine Zentrifugalkraft vermittelt wird, die ausreichend ist, um die Flüssigkeit in die Abmessräume und die überschüssige Flüssigkeit in die mindestens eine Überlaufkammer zu treiben und welches Verfahren dadurch gekennzeichnet ist, dass die Drehgeschwindigkeit des Rotors auf einen zweiten, höheren Wert gebracht wird, bei dem der Flüssigkeit eine Zentrifugalkraft vermittelt wird, die grösser als der vorgegebene Schwellenwert ist, wobei die Flüssigkeitsmengen, die in den Abmessräumen enthalten sind, in die ihnen zugeordneten Küvetten fliessen.

Im folgenden werden anhand der beiliegenden Zeichnungen einige Ausführungsbeispiele der Erfindung beschrieben.

Es zeigt

Fig. 1 eine Draufsicht mit teilweiser Entkreisung einer ersten Ausführungsform,

Fig. 2 einen Querschnitt längs der Linie II–II in Fig. 1,

Fig. 3 eine Draufsicht einer zweiten Ausführungsform,

Fig. 4 ein Querschnitt längs der Linie IV–IV in Fig. 3,

Fig. 5 und 6 je eine Draufsicht von Abwandlungen der Ausführungsform gemäss Fig. 3,

Fig. 7 einen Querschnitt längs der Linie VII–VII in Fig. 6,

Fig. 8 eine perspektivische Ansicht einer dritten Ausführungsform,

Fig. 9 und 10 je einen Querschnitt einer vierten Ausführungsform.

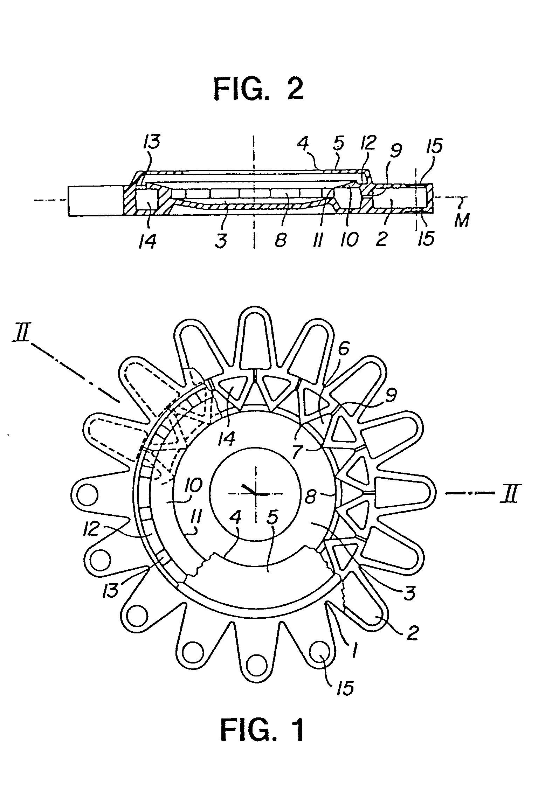

Der in Fig. 1 und 2 gezeigte Küvetten-Rotor hat die Form einer Scheibe 1, an deren Peripherie eine Reihe von Küvetten-Analysen 2 gleichmässig angeordnet sind. Der mittlere Bereich dieses Rotors dient als Verteilungskammer 3, die von aussen durch eine zentrale Öffnung 4 in der oberen Wand 5 des Rotors zugänglich ist. Der Boden der Verteilungskammer 3 ist tellerförmig, hat einen flachen mittleren Bereich und einen ringförmigen Rand in der Form eines Kegelstumpfs. Die Peripherie der Verteilungskammer 3 ist mit einer Reihe von dreieckigen Abmessräumen 6 verbunden. Benachbarte Abmessräume sind voneinander durch eine Kante 7 getrennt, die durch die Schnittlinie ihrer Seitenwände gebildet ist, wobei alle Kanten 7 in der Draufsicht des Rotors auf einem gemeinsamen Kreis liegen. Die Seiten der Abmessräume, die an diesen Kreis angrenzen, sind in Richtung der Verteilungskammer 3 offen und bilden die jeweiligen Eingänge 8 der Abmessräume 6. Der Boden dieser Abmessräume erstreckt sich unterhalb des in radialer Richtung äussersten Randes der Verteilungskammer 3. An ihren in radialer Richtung nach aussen gerichteten Ecken besitzen die Abmessräume 6 Ausgangsöffnungen, die je an einem Ende eines Übertragungsdurchgangs 9 liegen, der jeden Abmessraum mit der ihm zugeordneten Analysenküvette 2 verbindet. Es ist aus der Fig. 2 ersichtlich, dass die Wände des Abmessraums 6, die an dem Übertragungsdurchgang 9 angrenzen und fast senkrecht zu dessen Längsachse liegen, einen Winkel bilden, der kleiner als 180° ist, und dessen Symmetrieachse annähernd mit einem Radius zusammenfällt, der durch das an dem Abmessraum angrenzende Ende des Übertragungsdurchgangs verläuft. Diese Anordnung erleichtert die Entleerung der Abmessräume 6 unter Einwirkung der Zentrifugalkraft. Die Übertragungsdurchgänge 9 sind Kapillarröhrchen, deren Querschnitt so gewählt ist, dass die dadurch erzeugten Kapillarkräfte eine gute Haftung des Flüssigkeitsminiskus am Ausgang dieser Durchgänge sichert. Um das Risiko einer Entstabilisierung dieses Miniskus möglichst weitgehend zu reduzieren, mündet jeder der Übertragungsdurchgänge in einer im wesentlichen parallel zur Rotationsachse des Rotors liegenden Innenwand der entsprechenden Küvette und annähernd im gleichen Abstand zur oberen und unteren Innenwand derselben.

Die Eingänge der Abmessräume 6 grenzen an einer ringförmigen Wand 10, die sie überdeckt und deren obere Fläche in einer schiefen Ebene liegt und mit den Eingängen 8 eine Kante 11 bildet. Die obere Fläche der Wand 10 führt zu einem ringförmigen Sammelkanal 12, dessen Boden Öffnungen 13 aufweist, die zu dreieckigen Überlaufkammern 14 führen, die je zwischen zwei benachbarten Abmessräumen 6 liegen. Die Querschnitte der Öffnungen 13 werden gross genug gewählt, damit keine Kapillarkraft auf die durch diese Öffnungen fliessende Flüssigkeit einwirken kann.

Jede Küvette 2 besitzt zwei Fenster 15, die für die photometrische Messung des Küvetteninhalts vorgesehen sind. Diese Fenster stehen einander gegenüber entlang einer Achse die parallel zur Rotationsachse des Rotors 1 verläuft.

Die Küvetten-Rotors 1 werden durch Spritzguss eines durchsichtigen Kunststoffs hergestellt. Im folgenden Beispiel wird jeder Teil des Rotors oberhalb bzw. unterhalb der mittleren Ebene M, wie auch seine obere Wand 5, in einem getrennten Spritzgussverfahren hergestellt. Das verwendete Material ist durchsichtig für Ultravioletstrahlung und ist in diesem Beispiel unstabilisierte Polymethylacrylat (PMMA), das durch ICI unter der eingetragenen Schutzmarke DIAKON verkauft wird. Die verschiedenen Teile des Rotors werden vorzugsweise noch einmal erhitzt, bevor sie mittels reiner Lösemittel wie Chloroform oder Dichloräthan zusammengesetzt werden. Die Zusammensetzung dieser Teile kann auch mittels Ultraschall-Schweissen durchgeführt werden.

Bei der Verwendung des oben beschriebenen Küvetten-Rotors 1 wird dieser auf den Antriebsteller eines Analysengerätes (nicht gezeigt) gelegt, eine bestimmte Flüssigkeitsmenge, die grösser als das Gesamtvolumen aller Abmessräume ist, wird in die Verteilungskammer eingeführt, und der Rotor wird mit einer ersten Drehgeschwindigkeit von ca. 400 bis 600 Umdrehungen/Min. während 4–8 Sekunden gedreht. Bei dieser Geschwindigkeit wird die in der Verteilungskammer enthaltene Flüssigkeit durch die Zentrifugalkraft in die Abmessräume 6 getrieben und schreitet fort unter Einwirkung der Kapillarkräfte durch die Übertragungsdurchgänge 9, bis deren Enden, die in den senkrechten Innenwänden der entsprechenden Analysenküvetten 2 münden, wo ein stabiler Miniskus entsteht, der ein Entweichen des in der Analysenküvette 2 enthaltenen Luftvolumens verhindert. Da diese Küvetten 2 im übrigen hermetisch geschlossen sind, wirkt das darin enthaltene Luftvolumen gegen ein Eindringen der Flüssigkeit in die Küvetten 2, und die Zentrifugalkraft, die der Flüssigkeit bei der Drehungsgeschwindigkeit von 400 bis 600 Umdrehungen/Min. vermittelt wird, reicht nicht aus, um den Widerstand zu überwinden, das den in den Küvetten 2 gefangene Luftvolumen ausübt. Die Menge vom Reagens, die in der Verteilungskammer 3 angeführt wird, wird absichtlich grösser als das Gesamtvolumen der Abmessräume 6 gewählt, so dass ein Flüssigkeitsüberschuss bleibt, nachdem die Abmessräume vollständig gefüllt sind. Dieser Überschuss wird dann zu der Überlaufkammer durch den Verbindungsweg getrieben, der durch die obere Fläche der ringförmigen Wand 10, den Sammelkanal 12 und die in diesem Boden vorgesehenen Öffnungen 13 gebildet ist. Nur die in den Abmessräumen 6 enthaltenen Flüssigkeitsmengen bleiben also an der Peripherie der Verteilungskammer 3, und die Überlaufkammer sichert, dass das Gesamtvolumen der Abmessräume mit Flüssigkeit gefüllt wird, was eine hohe Genauigkeit der abgemessenen Flüssigkeitsmengen gewährleistet.

In einem weiteren Verfahrensschritt, die Drehgeschwindigkeit des Rotors wird rasch auf ca. 4000 bis 5000 Umdrehungen/Min. gebracht und bleibt dabei während 2–5 Sekunden. Die Zentrifugalkraft, die den in den Abmessräumen 6 enthaltenen Flüssigkeitsmengen bei dieser Geschwindigkeit vermittelt wird, reicht aus um zu bewirken, dass der Flüssigkeitsdruck den Miniskus am Ende von jedem Übertragungsdurchgang 9 bringt, wodurch das Eindringen der Flüssigkeit in die Küvetten 2 und gleichzeitig ein entgegenströmendes Entweichen von Luft aus diesen Küvetten erfolgt. Genauer betrachtet, findet bei diesem Vorgang in den Übertragungsdurchgängen 9 eine Strömung von Flüssigkeitstropfen und eine entgegengesetzte Strömung von Luftblasen statt, bis die ganze in jedem Abmessraum 6 enthaltene Flüssigkeitsmenge in die entsprechende Küvette übertragen worden ist, wobei diese Übertragung für alle Küvetten gleichzeitig stattfindet.

Falls die Proben vor dem obigen Vorgang in den Analysenkammern eingeführt wurden, beginnen die Reaktionen zwischen Proben und Reagenzien und die Messung kann durch die Fenster 15 durchgeführt werden, nachdem die Drehgeschwindigkeit des Rotors auf ca. 400 bis 600 Umdrehungen/Min. herabgesetzt wird. Gemessen werden Änderungen der dekadischen Extinktion der Proben im Verlauf der Reaktionen nach einem gutbekannten Verfahren.

Wenn am Ende der Drehung des Rotors mit ca. 4000 bis 5000 Umdrehungen/Min. die Proben sich noch nicht in den Analysenküvetten 2 befinden, können sie z.B. mit einer Pipette abgemessen und in die Abmessräume 6 eingeführt werden. In diesem Fall muss das Volumen jeder Probe kleiner sein als das Volumen, das ein Abmessraum im Stillstand behalten kann. Andernfalls würden sich verschiedene Proben miteinander vermischen. Nach Einführung der verschiedenen Proben in die Abmessräume werden diese Proben durch eine zweite Rotation des Rotors mit ca. 4000 bis 5000 Umdrehungen/Min. in die entsprechenden Analysenküvetten getrieben, und die Messungen können beginnen, nachdem die Drehgeschwindigkeit des Rotors auf ca. 400 bis 600 Umdrehungen/Min. herabgesetzt wird.

Die ganze Ausführung und die Funktionsweise des oben beschriebenen Küvetten-Rotors beruht auf das Zurückhalten der Flüssigkeit zwischen den Abmessräumen 6 und Küvetten 2. Dieses Zurückhalten wird durch das Zusammenwirken der Kapillarkraft, die in den Übertragungsdurchgängen 9 entsteht und eine gute Haftung des Miniskus sichert, der ein Entweichen von Luft aus der Küvette 2 verhindert, mit dem Luftvolumen, das in den hermetisch geschlossenen Küvetten enthalten ist. Nur ein ausreichend grosser Differentialdruck, der den Miniskus brechen kann, kann daher das Eindringen der Flüssigkeit in die Küvetten ermöglichen. Der Fluss der überschüssigen Flüssigkeit in die Überlaufkammer stösst hingegen auf einen viel geringeren Widerstand, so dass, sobald die Abmessräume 6 bis deren Eingängen vollständig gefüllt sind, die überschüssige Flüssigkeit in die Überlaufkammer 14 durch den Verbindungsweg fliesst, der durch die ringförmige Wand 10, den Sammelkanal 12 und die in dessen Boden vorgesehenen Öffnungen 13 gebildet ist, wobei die Abmessungen dieser Öffnungen das gleichzeitige Einströmen von Flüssigkeit und Ausströmen von Luft ermöglichen. Die Übertragung der Flüssigkeit von den Abmessräumen 6 zu den Küvetten 2 erfolgt infolge der Erhöhung des Flüssigkeitsdrucks unter Einwirkung der Zentrifugalkraft, die durch die Erhöhung der Drehgeschwindigkeit des Rotors von ca. 400 bis 600 Umdrehungen/Min. auf ca. 4000 bis 5000 Umdrehungen/Min. entsteht. Diese Art der Übertragung, bei der die Zentrifugalkraft auf jede abgemessene Flüssigkeitsmenge einwirkt, sichert eine vollständige Verteilung der abgemessenen Flüssigkeitsmengen in die Küvetten 2, und gewährleistet auf diese Weise die Genauigkeit der Messungen, die in diesen Küvetten durchgeführt werden. Eine solche Genauigkeit ist hingegen durch die vorbekannte Übertragung der Flüssigkeit durch Flüssigkeitsdruck nicht gewährleistet. Die Zentrifugierung ist im übrigen die übliche Übertragungsmöglichkeit in dieser Art von Analysen. Man könnte sich selbstverständlich auch andere Mittel zum Zurückhalten der Flüssigkeit in den Abmessräumen vorstellen. Der grosse Vorteil der oben beschriebenen Mittel zum Zurückhalten der Flüssigkeit liegt allerdings darin, dass sie keine beweglichen Teile enthalten und lediglich durch eine geeignete Formgebung und Wahl der Abmessungen der verschiedenen Teile des Rotors gebildet sind. Aus diesem Grund kann der Küvetten-Rotor durch Spritzguss und Kleben oder Schweissen seiner Teile und somit zu einem Herstellungspreis hergestellt werden, der mit dem von bekannten Küvetten-Rotoren vergleichbar ist. Der erfindungsgemässe Küvetten-Rotor kann ausserdem in bereits existierenden Analysengeräten verwendet werden, wobei lediglich eine Pipette niedriger Genauigkeit benötigt wird, um die Reagensmenge in die Verteilungskammer 3 einzuführen.

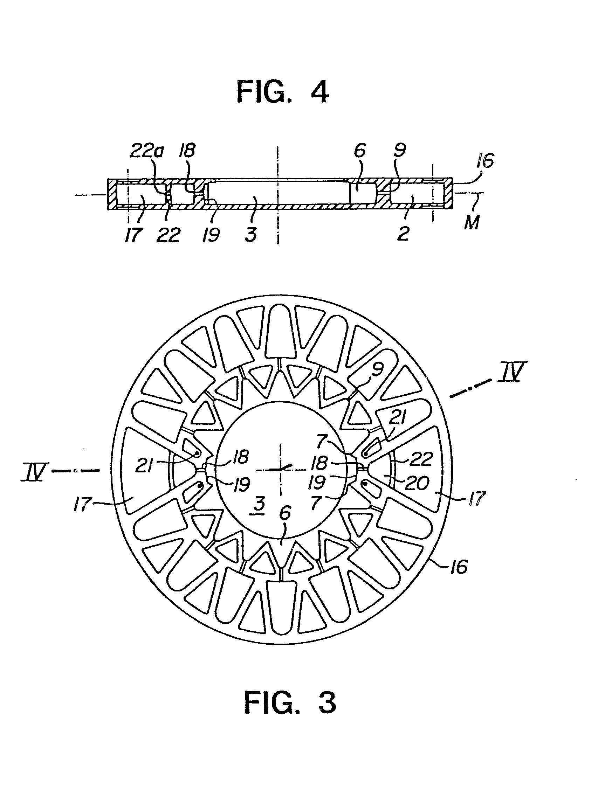

Die in Fig. 3 und 4 gezeigte Ausführungsform eines erfindungsgemässen Küvetten-Rotors unterscheidet sich vom oben beschriebenen Rotor grundsätzlich darin, dass der Küvetten-Rotor 16 nur zwei Überlaufkammern 17 enthält, wobei die eine gegenüber der anderen liegt. Die Abmessräume 6 und die Analysen-Küvetten 2 dieses Rotors sind mit denen der oben beschriebenen Ausführungsform völlig identisch. Deshalb wird hier lediglich die Struktur der Überlaufkammer 17 im Detail beschrieben, die mit der zentralen Verteilungskammer 3 durch je einen Verbindungsdurchgang 18 verbunden sind. Jeder dieser Verbindungsdurchgänge 18 erstreckt sich zwischen einem Hohlraum 19, der zwischen zwei Abmessräumen liegt, und eine Überlaufkammer 17. Die Grenze zwischen jedem Hohlraum 19 und einem der benachbarten Abmessräume ist durch die Kante 7 des Abmessraums definiert, so dass die nach innen gerichteten Ränder der Hohlräume 19 in der gleichen Entfernung von der Rotationsachse des Rotors 16 liegen wie die Eingänge seiner Abmessräume 6.

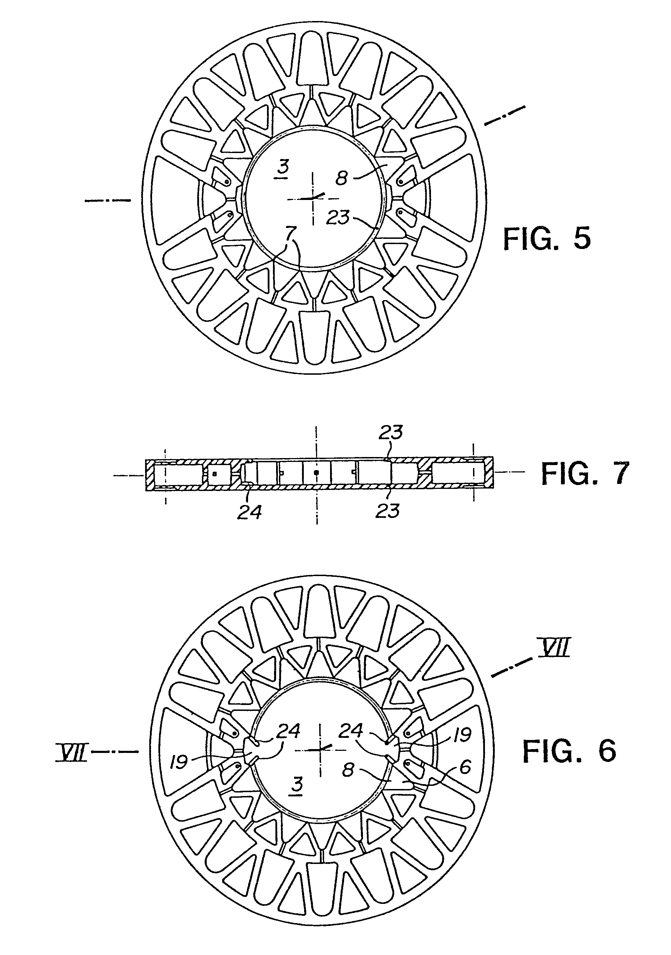

Der Innenraum der Überlaufkammer 17 ist durch Verbindungskanäle mit zwei Nebenkammern verbunden (die Verbindungskanäle sind in Fig. 3 nicht gezeigt, sie sind aber aus Fig. 5 ersichtlich), die in der Nähe des Eingangs des Verbindungsdurchgangs 18 liegen. Diese Nebenkammern haben je eine Lüftungsöffnung 21, die in der oberen Wand des Rotors vorgesehen ist. Der Widerstand zum Eindringen der Flüssigkeit in die Überlaufkammer 17 ist also viel kleiner als der Widerstand zum Eindringen der Flüssigkeit in die Analyse-Küvetten 2, da die Überlaufkammern 17 Lüftungsöffnungen 21 besitzen, während die Küvetten hermetisch geschlossen sind, sobald die Flüssigkeit die Übertragungsdurchgänge 9 versperren.

Während der Rotation des Rotors mit niedriger Geschwindigkeit (400 bis 600 Umdrehungen/ Min.), wird das in die Verteilungskammer 3 angeführte Reagens in die Abmessräume 6 und in die Hohlräume 19 getrieben. Da in den Verbindungsdurchgängen 18 zwei Strömungen stattfinden, und da alle Kanten 7 auf einem gemeinsamen Kreis liegen, fliesst die überschüssige Flüssigkeit innerhalb von diesem gemeinsamen Kreis zu den Hohlräumen 19 und gelangt in die Überlaufkammer 17, wobei aus dieser Kammer ein Luftvolumen durch die Lüftungsöffnungen 21 entweicht, das dem Volumen der überschüssigen Flüssigkeit entspricht. Eine mit einem mittleren Durchgang 22a versehene Trennwand teilt die Überlaufkammer in zwei Abteile. Diese Trennwand verhindert ein Zurückfliessen der überschüssigen Flüssigkeit in die Verteilungskammer während folgenden Verfahrensschritten, wie demjenigen für die Mischung der Probe mit dem Reagens, bei denen Drehschwingungen des Rotors durchgeführt werden.

Gegenüber der Ausführungsform gemäss Fig. 3 und 4 unterscheidet sich die abgewandelte Ausführungsform gemäss Fig. 5 lediglich darin, dass die obere und die untere Innenwand des Rotors kreisförmige Rillen 23 aufweisen, die an die Kanten 7 angrenzen. Diese Rillen tragen dazu bei, eine gute Haftung des Miniskus am Eingang 8 von jedem Abmessraum 6 zu sichern, und auf diese Weise die Genauigkeit der abgemessenen Flüssigkeitsmengen zu verbessern.

Die Fig. 6 und 7 zeigen eine weitere Abwandlung der Ausführungsform gemäss Fig. 3 und 4, die ausser den oben erwähnten Rillen 23 Rippen 24 aufweisen, die die Rille in der unteren Innenwand des Rotors unterbrechen, auf beiden Seiten des Verbindungsdurchgangs 18 liegen und sich innerhalb des durch die Rille abgegrenzten Kreises erstrecken. Die Rippen 24 sind eine Fortsetzung der Seitenwände der Abmessräume 6, die an die Hohlräume 19 angrenzen. Diese Rippen 24 haben die Funktion, den Fluss der Flüssigkeit zu den Hohlräumen 19 etwas zu erschweren. Dies ist nützlich, da ohne solche Rippen das Vorhandensein der Hohlräume 19 eine Veränderung der Minisken an den Eingängen 8 der angrenzenden Abmessräume 6 verursachen könnte, und dies könnte die Genauigkeit der mit diesen Abmessräumen abgemessenen Flüssigkeitsmengen beeinträchtigen. Dies wird mit den Rippen 24 verhindert. Es sei in diesem Zusammenhang darauf hingewiesen, dass ein Ziel der vorliegenden Erfindung darin liegt, eine Genauigkeit der Grössenordnung oder sogar kleiner als 1% zu erreichen, so dass jede Fehlerquelle eliminiert werden muss.

Versuche mit den oben beschriebenen Küvetten-Rotoren zeigen, dass damit die gewünschte Genauigkeit erreicht wird, wobei der Fehlerfaktor kleiner als 1% ist, d.h. dass mit diesen Rotoren die gleiche Genauigkeit wie mit den besten bisher bekannten Präzisionspipetten erreicht wird. Ausserdem ist die oben beschriebene Art der Abmessung nicht von irgendwelchen Funktionsfehlern abhängig, da dabei kein beweglicher Teil benützt wird, und weil die Rotoren, die alle aus einem Guss hergestellt werden, für einen einmaligen Gebrauch vorgesehen sind.

Die in den Figuren 3–7 gezeigten Rotoren werden durch Spritzguss deren oberen und unteren Teilen hergestellt, die ungefähr gleich dick sind, und die miteinander geklebt oder mit Unterschall geschweisst werden, wie oben bereits erläutert.

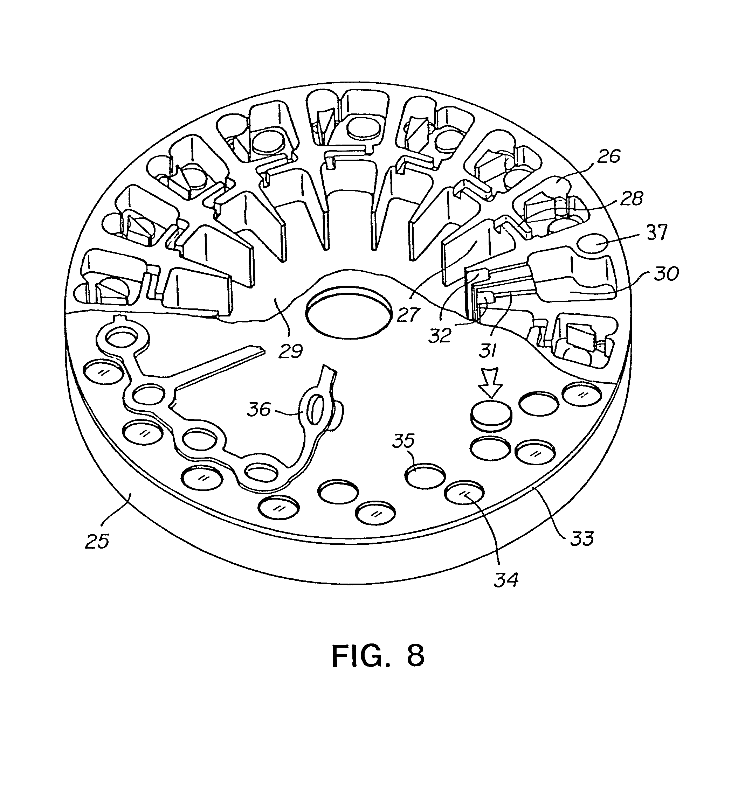

Die Figur 8 zeigt einen Küvetten-Rotor 25, der speziell zur Durchführung von bakteriologischen Analysen vorgesehen ist. Dieser Rotor 25 enthält Analysenküvetten 26, die je mit einem Abmessraum 27 durch einen Übertragungsdurchgang 28 verbunden sind. Im mittleren Teil des Rotors befindet sich eine Verteilungskammer 29, an deren Peripherie alle Eingänge der Abmessräume 24 angrenzen. In der kreisfömigen Anordnung von Analysenküvetten 26 befindet sich eine Überlaufkammer 30, die mit der Verteilungskammer 29 durch drei Verbindungsdurchgänge 31 verbunden ist. Zwei dieser Durchgänge münden in je einen Hohlraum 32, der in die Verteilungskammer 29 mündet. Bei der Verwendung des Rotors fliesst die überschüssige Flüssigkeit durch diese Durchgänge 31, wobei die ihnen zugeordneten Hohlräume 32 den Fluss der überschüssigen Flüssigkeit durch diese Durchgänge fördert. Der dritte Durchgang 31, zu der kein Hohlraum 32 zugeordnet ist, dient als Lüftungsöffnung der Überlaufkammer 30, so dass, wenn überschüssige Flüssigkeit in diese Kammer eindringt, ein entsprechendes Luftvolumen daraus entweichen kann. Diese Anordnung ermöglicht, den Innenraum des Rotors gegen aussen vollständig zu isolieren, was bei einer bakteriologischen Analyse wichtig ist. Das durch den mittleren Durchgang 31 in die Verteilungskammer 29 eindringende Luftvolumen kann zwar die Genauigkeit der Abmessung in den benachbarten Abmessräumen 27 etwas beeinträchtigen, dies ist jedoch bei bakteriologischen Analysen kein grosser Nachteil, da es dabei wichtiger ist, das Kontaminationsrisiko möglichst klein zu halten, als eine hohe Genauigkeit der Abmessung zu erzielen.

Die obere Seite des Rotors 25 ist durch eine Platte 33 gedeckt, die darauf geklebt oder geschweisst wird. Diese Platte weist pro Küvette 26 ein optisches Fenster 34, das gerade gegenüber einem im Boden jeder Küvette vorgesehenen Fenster gleicher Art liegt. Die Platte 33 weist ebenfalls Öffnungen 35, durch die beispielsweise ein Antibiotikum eingeführt werden kann, dessen Wirkung auf einen bestimmten Bakterienstamm geprüft werden soll. Nach Einführung des Antibiotikums oder der Antibiotika können die Küvetten 25 mit einem abnehmbaren Verschluss 36 hermetisch geschlossen werden. Das Antibiotikum ist vorzugsweise von einer wasseraufsaugenden Papierscheibe getragen, wie diejenige die unter der Schutzmarke «Sensi-disc» von Becton, Dickinson & Co geliefert werden. Eine eine Bakterienkultur enthaltene Flüssigkeit wird in der Verteilungskammer 29 eingeführt in der gleichen Weise wie die Reagenzien in den vorher beschriebenen Ausführungsformen. Danach wird der Rotor mit einer ersten Geschwindigkeit gedreht, um die Abmessräume 27 zu füllen. Die überschüssige Flüssigkeit wird durch die Hohlräume 32 in die ihnen zugeordneten Verbindungsdurchgänge 31 geleitet, während die aus der Überlaufkammer entweichende Luft durch den Durchgang 31 entweicht, der unmittelbar in die Verteilungskammer mündet. Nachdem der ganze Flüssigkeitsüberschuss in die Überlaufkammer 30 gelangt ist, wird die Drehgeschwindigkeit des Rotors 25 erhöht, um die in den Abmessräumen 27 enthaltenen Flüssigkeitsmengen in die entsprechende Analysenküvette 26 zu übertragen, wie in den obigen Ausführungsbeispielen beschrieben. Die Küvette 37, die neben der Überlaufkammer 30 liegt, wird als Bezugsküvette verwendet.

Die Rotoren können auch vorbeschickt mit bestimmten Antibiotika verkauft werden. In diesem Fall braucht der Benutzer sich nicht um die Beschickung des Rotors mit den Antibiotika zu kümmern. Die Tatsache, dass die Übertragungsdurchgänge 28 unmittelbar an der Platte 33 angrenzen, vermindert die Stabilität der Menisken an den Ausgängen von diesen Durchgängen, aber vereinfacht die Herstellung des Rotors, der durch Spritzguss praktisch in einem Stück hergestellt werden kann, da zusätzlich lediglich eine Platte 33 mit der erforderlichen Öffnung 35 und Fenster 34 notwendig ist, um die gesamte Anordnung der Küvetten 26 und der Abmessräume 27 zu decken. Die mit dieser Ausführungsform erzielte Genauigkeit bei der Abmessung der Flüssigkeitsmengen mit den Abmessräumen 27 ist für bakteriologische Analysen durchaus ausreichend. Im Falle von vorbeschickten Rotoren sind die Öffnungen 35 nicht erforderlich, da die Beschickung der Küvetten mit den Antibiotika vor der Befestigung der Platte 33 am unteren Teil des Rotors vorgenommen wird.

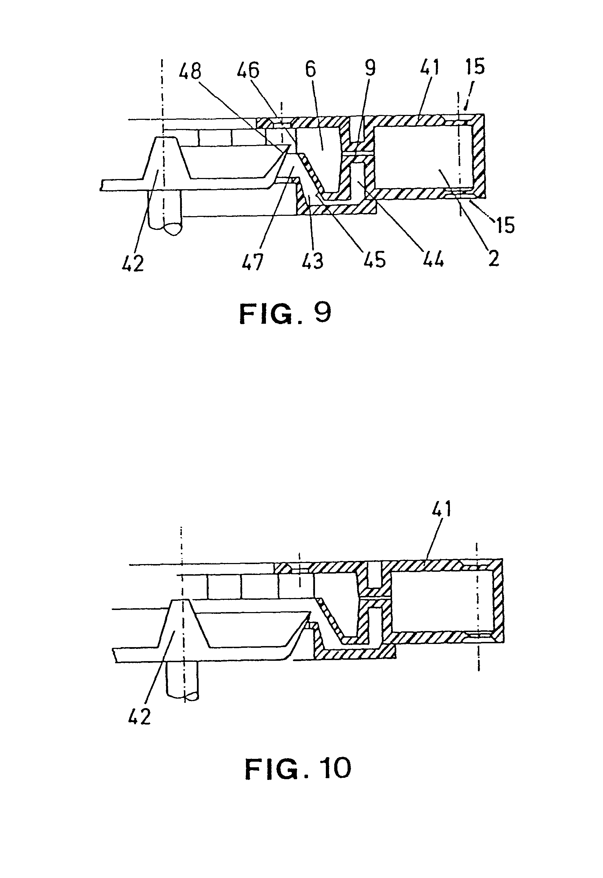

Die in Figuren 9 und 10 gezeigte Ausführungsform unterscheidet sich von denjenigen, die oben beschrieben sind, im wesentlichen einerseits durch die Anordnung der Überlaufkammer, andererseits durch die Anordnung der Verteilungskammer in bezug zu den übrigen Teilen des Rotors.

Der in Figur 9 gezeigte Küvetten-Rotor besteht aus einer Verteilungskammer 42 zur Aufnahme der Flüssigkeit, die in einer Anzahl von abgemessenen Flüssigkeitsmengen aufgeteilt und anschliessend durch Drehung des Rotors in Analysenküvetten verteilt werden soll, und einer Einrichtung 41, die die Abmessräume 6, die Übertragungsdurchgänge 9, die Analysenküvetten 2, eine im unteren Teil der Einrichtung angeordnete, ringförmige Überlaufkammer 44 und ein Verbindungsdurchgang zur Überlaufkammer enthält, wobei dieser Durchgang einen ringförmigen Sammelkanal 43 enthält, der unterhalb der Abmessräume liegt. Dieser Sammelkanal hat einen Eingang 47 und ist von den Abmessräumen durch eine ringförmige Wand 45 getrennt, die sich vom unteren Rand der Eingänge 46 bis zur Überlaufkammer erstreckt.

Wie in den Figuren 9 und 10 gezeigt, kann die zentrale Verteilungskammer 42, in bezug auf die Einrichtung 41, die die Analysenküvetten 2 und die Abmessräume 6 enthält, zwei Stellungen entlang der Rotationsachse des Rotors einnehmen: Eine erste Stellung, in der der radial äusserste obere Rand 48 der Verteilungskammer sich auf einer Höhe befindet, die zwischen den Höhen des oberen bzw. unteren Randes der Eingänge 46 der Abmessräume liegt, und eine zweite Stellung in der der oben erwähnte Rand der Verteilungskammer zwischen den Höhen des oberen bzw. unteren Randes des Eingangs 47 des Sammelkanals liegt.

Der Übergang von der einen Stellung zu der anderen kann durch Verschiebung der Kammer 42 in bezug auf die Einrichtung 41 erfolgen oder umgekehrt.

In einer ersten Phase der Verwendung des Küvetten-Rotors gemäss Figuren 9 und 10 wird dieser auf den Antriebsteller (nicht gezeigt) eines Analysengerätes gelegt. In die Verteilungskammer 42 wird dann eine Flüssigkeitsmenge eingeführt, die grösser als das Gesamtvolumen der Abmessräume ist. Mit der Kammer 42 in der ersten Stellung (siehe Figur 9) wird dann der Rotor mit einer ersten Drehgeschwindigkeit von ca. 600 Umdrehungen pro Minute gedreht und dies während 4 bis 8 Sekunden. Bei dieser Drehgeschwindigkeit wird die in die Kammer 42 eingeführte Flüssigkeit durch die Zentrifugalkraft in die Abmessräume 6 getrieben und scheidet unter Einwirkung der Kapillarkraft durch die Übertragungsdurchgänge 9 bis ihren Enden, die in den senkrechten Innenwänden der entsprechenden Analysenküvetten 2 münden. An diesen Enden bilden sich stabile Menisken, die diese Durchgänge versperren und ein Entweichen von Luft aus den Küvetten 2 verhindern. Da diese Küvetten im übrigen hermetisch geschlossen sind, und da die Zentrifugalkraft, die der Flüssigkeit bei Drehung des Rotors mit einer Geschwindigkeit von ca. 600 Umdrehungen pro Minute vermittelt wird, nicht ausreicht, um den Widerstand zu überwinden, der das in den Küvetten 2 enthaltene Luftvolumen gegen das Eindringen der Flüssigkeit in diese Küvetten ausübt, trägt dieses Luftvolumen dazu bei, ein solches Eindringen zu verhindern. Da die in der Kammer 42 eingeführte Flüssigkeitsmenge absichtlich grösser als das Gesamtvolumen aller Abmessräume 6 gewählt wird, bleibt ein Flüssigkeitsüberschuss, nach dem die Abmessräume vollständig gefüllt sind. Dieser Überschuss wird in den ringförmigen Sammelkanal 43 getrieben, durch den die überschüssige Flüssigkeit in die Überlaufkammer 44 fliesst. Nur die mit den Abmessräumen 6 abgemessenen Flüssigkeitsmengen bleiben also darin enthalten. Auf diese Weise gewährleistet die Überlaufkammer eine sehr hohe Genauigkeit der abgemessenen Flüssigkeitsmengen.

In einer zweiten Phase der Verwendung des Küvetten-Rotors wird die Kammer 42 in die zweite Stellung gebracht (siehe Figur 10) und die Geschwindigkeit des Rotors wird rasch auf ca. 4000 Umdrehungen pro Minute erhöht und bleibt bei diesem Wert während 2–5 Sekunden. Bei dieser Geschwindigkeit ist die den abgemessenen Flüssigkeitsmengen vermittelte Zentrifugalkraft ausreichend, um einen Flüssigkeitsdruck zu erzeugen, der den Meniskus am radial äussersten Ende jedes Übertragungsdurchganges 9 bricht. Dies ermöglicht das Eindringen der Flüssigkeit in die Küvetten, wobei in den Übertragungsdurchgängen 9 zwei entgegengerichtete Strömungen stattfinden, einerseits Flüssigkeitstropfen, die in die Analysenküvette 2 fliessen, andererseits Luftblasen, die aus diesen Küvetten entweichen. Auf diese Weise findet eine gleichzeitige Übertragung der in den Abmessräumen 6 enthaltenen Flüssigkeitsmengen in die ihnen zugeordneten Analysenküvetten 2.

Wenn die Proben in einem früheren Vorgang in die Küvetten eingeführt wurden, beginnen die Reaktionen unmittelbar nach der oben beschriebenen Übertragung der abgemessenen Flüssigkeitsmengen in den Analysenküvetten, und die Messungen können dann durch die Fenster 15 durchgeführt werden, nachdem die Drehgeschwindigkeit des Rotors auf ca. 600 Umdrehungen pro Minute herabgesetzt wird, um Änderungen der dekadischen Extinktion der Proben während ihrer Reaktionen in an sich bekannter Weise zu messen.

Die Ausführungsform gemäss Figuren 9 und 10 ist besonders vorteilhaft, wenn die in der Verteilungskammer eingeführte Flüssigkeit derartige Eigenschaften hat, dass man damit rechnen muss, dass am Ende der ersten Phase der Verwendung des Rotors, d.h. vor der Übertragung der in den Abmessräumen enthaltenen Flüssigkeitsmengen zu den Analysenküvetten, einige Tropfen der in die Verteilungskammer eingeführten Flüssigkeit, an deren Innenwand haften bleiben. Bei den Ausführungsformen gemäss Figuren 1–8 würde eine zufallartige und daher ungleichmässige Verteilung solcher Tropfen in die Analysenküvetten während der Übertragung der Inhalte der Abmessräume in die Küvetten stattfinden. Dies wird bei der Ausführungsform gemäss Figuren 9 und 10 verhindert, da in dieser Ausführungsform derartige überschüssige Tropfen während der Übertragungsphase mit Gewissheit in die Überlaufkammer fliessen. Ein ähnlicher Effekt kann auch erzielt werden, ohne die in Figur 10 gezeigte zweite Stellung der Kammer 42 vorzusehen, d.h., indem man diese Kammer in der ersten, in Figur 9 gezeigten Stellung auch während der Übertragungsphase lässt, vorausgesetzt, dass während der ersten Phase der Benutzung des Rotors, d.h. vor der Übertragungsphase, die Kammer 42 mit einer grösseren Drehgeschwindigkeit als die Einrichtung 41 gedreht wird. Dabei wird die Kammer 42 z.B. mit 1000 bis 1500 Umdrehungen pro Minute gedreht, während die Einrichtung 41 mit ca. 600 Umdrehungen pro Minute gedreht wird. Während der Übertragungsphase bleibt die Kammer 42 in der in Figur 9 gezeigten Stellung und ist vorzugsweise im Stillstand, während die Einrichtung 41 mit einer Drehgeschwindigkeit von ca. 4000 Umdrehungen pro Minute gedreht wird, um die Flüssigkeit von den Abmessräumen zu den entsprechenden Küvetten zu übertragen.

Die oben erläuterte Erfindung ermöglicht, gleichzeitig eine Vielzahl von Flüssigkeitsmengen genau zu dosieren (mit einem Fehler kleiner als 1%). Sie erfüllt also nicht nur die Funktion der genauesten Pipetten, die zur Verfügung stehen, sondern bringt auch eine beträchtliche Zeiteinsparung im Vergleich zur Beschickung der Küvetten eines solchen Rotors mittels einer Pipette. Diese Erfindung bringt also einerseits eine Kosteneinsparung, indem sie eine Präzisionspipette ersetzt, und eine Erhöhung der Produktivität durch die gleichzeitige Dosierung der Flüssigkeitsmengen. Derartige Vorteile waren bisher mit bestimmten Nachteilen verbunden, die insbesondere eine Verminderung der Genauigkeit zur Folge hatten, was insbesondere für klinisch chemische Analysen von Nachteil ist. Der wesentliche Vorteil, der mit der vorliegenden Erfindung erzielt wird, liegt darin, dass damit das Problem gelöst wird, ohne eine Pipette eine Dosierung vorzunehmen, deren hohe Genauigkeit mit der von den genauesten Pipettierungen vergleichbar ist, wobei fast ausschliesslich statische Mittel benutzt werden, die durch die Struktur des Rotors verkörpert werden. Da der Rotor aus zwei oder drei Teilen besteht, die durch Spritzguss hergestellt und durch Kleben oder Schweissen zusammengesetzt werden, ist es möglich solche Rotoren in grossen Serien herzustellen und dies zu einem Preis, der im Vergleich zum Preis von ähnlichen Rotoren, die aber keine Dosierungsmittel enthalten, durchaus konkurrenzfähig ist.

**Patentansprüche**

1. Küvetten-Rotor für ein Analysengerät, der eine zentrale Verteilungskammer (3), eine Vielzahl von an seiner Peripherie kreisförmig angeordneten Analysenküvetten (2), pro Analysenküvette je einen Abmessraum (6), der zwischen dem äusseren Rand der Verteilungskammer und der ihm zugeordneten Küvette liegt und einen Eingang (8, 46) hat, der ihn mit der Verteilungskammer verbindet und einen Ausgang hat, der ihn mit der ihm zugeordneten Küvette durch einen Übertragungsdurchgang (9) verbindet, und mindestens eine Überlaufkammer (14, 44) besitzt, die mit der Verteilungskammer durch mindestens einen Verbindungsweg (10, 12, 13, 43) verbunden ist, wobei der Eingang (8, 46) jedes Abmessraumes einen hydraulischen Widerstand aufweist, der kleiner als der hydraulische Widerstand des Verbindungsweges ist, dadurch gekennzeichnet, dass die Übertragungsdurchgänge (9), die Küvetten (2) und der mindestens eine Verbindungsweg (10, 12, 13, 43) so ausgebildet sind, dass das Einströmen von Flüssigkeit in die Küvetten erst dann möglich wird, wenn die bei Rotation des Rotors auf die Flüssigkeit einwirkende Zentrifugalkraft grösser als ein vorgegebener Schwellenwert ist.

2. Verfahren zum Betrieb des Küvetten-Rotors gemäss Anspruch 1, bei dem eine bestimmte Flüssigkeitsmenge, die grösser als das Gesamtvolumen aller Abmessräume ist, in die Verteilungskammer eingeführt wird und die Drehgeschwindigkeit des Rotors auf einen ersten Wert gebracht wird, bei der der Flüssigkeit eine Zentrifugalkraft vermittelt wird, die ausreichend ist, um die Flüssigkeit in die Abmessräume und die überschüssige Flüssigkeit in die mindestens eine Überlaufkammer zu treiben, dadurch gekennzeichnet, dass die Drehgeschwindigkeit auf einen zweiten, höheren Wert gebracht wird, bei dem der Flüssigkeit eine Zentrifugalkraft vermittelt wird, die grösser als der vorgegebene Schwellenwert ist, wobei die Flüssigkeitsmengen, die in den Abmessräumen enthalten sind, in die ihnen zugeordneten Küvetten fliessen.

3. Küvetten-Rotor gemäss Anspruch 1, dadurch gekennzeichnet, dass benachbarte Abmessräume (6) voneinander durch Wände getrennt sind, die Kanten (7) bilden, die in einem Kreis angeordnet sind, der mit der Drehachse des Rotors konzentrisch ist.

4. Küvetten-Rotor gemäss Anspruch 1, dadurch gekennzeichnet, dass die mindestens eine Überlaufkammer durch eine Vielzahl von Hohlräumen (14) gebildet ist, die je zwischen zwei benachbarten Abmessräumen (6) liegen, dass der mindestens eine Verbindungsweg durch einen ringförmigen Sammelkanal (12), dessen Boden zu den Hohlräumen führende Öffnungen (13) aufweist, und eine ringförmige Wand (10) gebildet ist, die die Abmessräume überdeckt und sich vom oberen Rand derer Eingänge bis zum Sammelkanal erstreckt.

5. Küvetten-Rotor gemäss Anspruch 4, dadurch gekennzeichnet, dass die ringförmige Wand (10) eine obere Oberfläche hat, die mit dem oberen Rand der Eingänge der Abmessräume (6) eine Kante (11) bildet.

6. Küvetten-Rotor gemäss Anspruch 1, dadurch gekennzeichnet, dass jeder Übertragungsdurchgang (9) eine rohrförmige Leitung ist, die durch ihre Abmessungen Kapillarkräfte in der Flüssigkeit erzeugt, die dazu geeignet sind, die notwendige Kohäsion zur Bildung eines Meniskus an deren Ende zu ermöglichen, das in die dem Übertragungsdurchgang zugeordnete Küvette mündet, und dass durch die Bildung eines solchen Meniskus und durch die Ausbildung der Analysenküvetten ein Luftvolumen in jeder Küvette einschliessbar ist.

7. Küvetten-Rotor nach Anspruch 6, dadurch gekennzeichnet, dass die Übertragungsdurchgänge (9) in einer im wesentlichen parallel zur Rotationsachse des Rotors liegenden Wand der jeweiligen Küvette (2) im Abstand von der Deckund der Bodenfläche derselben münden.

8. Küvetten-Rotor gemäss Anspruch 1, dadurch gekennzeichnet, dass die mindestens eine Überlaufkammer (17) zwischen zwei Küvetten (2) angeordnet ist und eine Decke hat, die eine Lüftungsöffnung (21) besitzt, und dass der mindestens eine Verbindungsweg ein Kanal (18) ist.

9. Küvetten-Rotor gemäss Anspruch 8, dadurch gekennzeichnet, dass er zwei Überlaufkammern (17) enthält, wobei die eine gegenüber der anderen liegt, und wobei jede Überlaufkammer mit der Verteilungskammer durch einen Kanal (18) verbunden ist.

10. Küvetten-Rotor gemäss Anspruch 3, dadurch gekennzeichnet, dass die obere und die untere Innenwand des Rotors kreisförmige Rillen (23) aufweisen, die an den Kanten (7) angrenzen.

11. Küvetten-Rotor gemäss Anspruch 10, dadurch gekennzeichnet, dass die Rille (23) in der unteren Innenwand des Rotors durch Rippen (24) unterbrochen ist, die auf beiden Seiten des Kanals (18) liegen und sich innerhalb des durch die Rille abgegrenzten Kreises erstrecken.

12. Küvetten-Rotor gemäss Anspruch 1, dadurch gekennzeichnet, dass die mindestens eine Überlaufkammer (17) zwischen zwei Küvetten angeordnet ist und dass für jede Überlaufkammer jeweils eine Lüftungsöffnung (21) in einer Nebenkammer (20) vorgesehen ist, die seitlich mit der mindestens einen Überlaufkammer (17) verbunden ist, wobei die Lüftungsöffnung in der Decke der Nebenkammer vorgesehen ist.

13. Küvetten-Rotor gemäss Anspruch 1, dadurch gekennzeichnet, dass jeder Abmessraum (6) eine Ecke hat, in die der entsprechende Übertragungsdurchgang (9) mündet, und die einen Winkel bildet, der kleiner als 180° ist und dessen Symmetrieachse annähernd mit einem Radius zusammenfällt, der durch das an dem Abmessraum angrenzende Ende des Übertragungsdurchgangs verläuft.

14. Küvetten-Rotor gemäss Anspruch 1, dadurch gekennzeichnet, dass die Analysenküvetten einen unteren und einen oberen Boden haben, die parallel zueinander liegen, und dass die Küvetten Seitenwände haben, die senkrecht zu den Bäden liegen, wobei der Abstand zwischen den Seitenwänden mit der Entfernung vom Mittelpunkt des Rotors abnimmt.

15. Küvetten-Rotor gemäss Anspruch 1, dadurch gekennzeichnet, dass die Eingänge (8) höher liegen als der Boden der Verteilungskammer (3) und als der Boden der Abmessräume (6).

16. Küvetten-Rotor gemäss Anspruch 1, dadurch gekennzeichnet, dass jede der Analysenküvetten eine Öffnung (35) besitzt, die mit einem Verschluss (36) schliessbar ist, der von der Aussenseite des Rotors abnehmbar ist.

17. Küvetten-Rotor gemäss Anspruch 1, dadurch gekennzeichnet, dass der mindestens eine Verbindungsweg durch einen ringförmigen Sammelkanal (43) gebildet ist, der unter den Abmessräumen (6) liegt, einen Eingang (47) hat und mit der mindestens einen Überlaufkammer (44) verbunden ist, wobei die Abmessräume vom Sammelkanal durch eine ringförmige Wand (45) getrennt sind, die sich vom unteren Rand der Eingänge (46) der Abmessräume bis zum Eingang der mindestens einen Überlaufkammer erstreckt.

18. Küvetten-Rotor gemäss Anspruch 1, dadurch gekennzeichnet, dass der mindestens eine Verbindungsweg ein einziger Sammelkanal ist, dass der Küvetten-Rotor zwei Teile besitzt, wobei der erste Teil (41) die Analysenküvetten (2) und die Abmessräume (6) enthält, und der zweite Teil die Verteilungskammer (42) enthält, wobei die Verteilungskammer einen radial äussersten oberen Rand (48), die Eingänge (46) der Abmessräume einen oberen und unteren Rand und der Eingang des Sammelkanals einen oberen und unteren Rand aufweisen, und dass der zweite Teil in bezug auf den ersten Teil zwei Stellungen entlang der Rotationsachse des Rotors einnehmen kann: eine erste Stellung, in der der radial äusserste obere Rand (48) der Verteilungskammer sich auf einer Höhe befindet, die zwischen den Höhen des oberen bzw. unteren Randes der Eingänge (46) der Abmessräume liegt, und eine zweite Stellung, in der der oben erwähnte Rand der Verteilungskammer zwischen den Höhen des oberen bzw. unteren Randes des Eingangs (47) des Sammelkanals (43) liegt.

19. Küvetten-Rotor gemäss Anspruch 17, dadurch gekennzeichnet, dass er zwei Teile besitzt, wobei der erste Teil (41) die Analysenküvetten (2) und die Abmessräume (6) enthält, und der zweite Teil die Verteilungskammer (42) enthält, und dass der zweite Teil in bezug auf den ersten Teil drehbar ist.

**Claims**

1. A cuvette rotor for an analyzer, said rotor having a central distribution chamber (3), a plurality of analysis cuvettes (2) arranged in the form of a circle at its periphery, a measuring chamber (6) for each of the analysis cuvettes, each such chamber being situated between the outer edge of the distribution chamber and its associated cuvette, and having an inlet (8, 46) which connects it to the distribution chamber, and an outlet which connects it to the associated cuvette via a transfer passage (9), and having at least one overflow chamber (14, 44) connected to the distribution chamber by at least one connecting path (10, 12, 13, 43), the inlet (8, 46) of each measuring chamber having a hydraulic resistance which is lower than the hydraulic resistance of the connecting path, characterised in that the transfer passages (9), the cuvettes (2), and the at least one connecting path (10, 12, 13, 43) are so constructed that liquid can flow into the cuvettes only when the centrifugal force acting on the liquid on rotation of the rotor is greater than a predetermined threshold value.

2. A method of operating the cuvette rotor according to claim 1, in which a given quantity of liquid greater than the total volume of all the measuring chambers is introduced into the distribution chamber and the speed of rotation of the rotor is brought to a first value at which a centrifugal force is transmitted to the liquid sufficient to force the liquid into the measuring chambers and the excess liquid into the at least one overflow chamber, characterised in that the speed of rotation is brought to a second higher value at which the centrifugal force transmitted to the liquid is greater than the predetermined threshold value, the quantities of liquid contained in the measuring chambers flowing into their associated cuvettes.

3. A cuvette rotor according to claim 1, characterised in that adjacent measuring chambers (6) are separated from one another by walls which form edges (7) arranged in a circle concentric with the axis of rotation of the rotor.

4. A cuvette rotor according to claim 1, characterised in that the at least one overflow chamber is formed by a plurality of cavities (14) each situated between two adjacent measuring chambers (6); the at least one connecting path is formed by an annular collecting duct (12), the base of which has apertures (13) leading to the cavities, and an annular wall (10) which covers the measuring chambers and extends from the top edge of heir inlets to the collecting duct.

5. A cuvette rotor according to claim 4, characterised in that the annular wall (10) has a top surface forming an edge (11) with the top edge of the inlets of the measuring chambers (6).

6. A cuvette rotor according to claim 1, characterised in that each transfer passage (9) is a tubular conduit of dimensions such as to produce capillary forces in the liquid adapted to permit the required cohesion to form a meniscus at the end thereof leading into the cuvette associated with the transfer passage; and an air volume is adapted to be enclosed in each cuvette as a result of the formation of such a meniscus and the construction of the analysis cuvettes.

7. A cuvette rotor according to claim 6, characterised in that the transfer passages (9) lead into an opening of a wall of the associated cuvette (2), said wall being substantially parallel with the axis of rotation of the rotor, and the opening being at a distance from the top and bottom surface of said cuvette.

8. A cuvette rotor according to claim 1, characterised in that at least one overflow chamber (17) is disposed between two cuvettes (2) and has a top wall which is formed with a venting aperture (21), and in that the at least one connecting path is a duct (18).

9. A cuvette rotor according to claim 8, characterised in that it contains two overflow chambers (17), one being situated opposite the other, each overflow chamber being connected to the distribution chamber by a duct (18).

10. A cuvette rotor according to claim 3, characterised in that the top and bottom inner walls of the rotor have circular grooves (23) adjoining the edges (7).

11. A cuvette rotor according to claim 10, characterised in that the groove (23) in the inner bottom wall of the rotor is unterrupted by ribs (24) situated on both sides of the duct (18) and extending inside the circle defined by the groove.

12. A cuvette rotor according to claim 1, characterised in that at least one overflow chamber (17) is disposed between two cuvettes and a venting aperture (21) is provided for each overflow chamber in a secondary chamber (20) laterally connected to the at least one overflow chamber (17), the venting aperture being formed in the top wall fo the secondary chamber.

13. A cuvette rotor according to claim 1, characterised in that each measuring chamber (6) has a corner into which the corresponding transfer passage (9) leads and which forms an angle less than 180° and the axis of symmetry of which coincides approximately with a radius extending through that end of the transfer passage which adjoins the measuring chamber.

14. A cuvette rotor according to claim 1, characterised in that the analysis cuvettes have top and bottom walls situated parallel to one another and the cuvettes have side walls perpendicular to the top and bottom walls, the distance between the side walls decreasing with increasing distance from the rotor centre.

15. A cuvette rotor according to claim 1, characterised in that the inlets (8) are higher than the end of the distribution chamber (3) and than the bottom of the measuring chambers (6).

16. A cuvette rotor according to claim 1, characterised in that each of the analysis cuvettes has an aperture (35) adapted to be closed by a closure (36) removable from the outside of the rotor.

17. A cuvette rotor according to claim 1, characterised in that the at least one connecting path is formed by an annular collecting duct (43) situated beneath the measuring chambers (6), has an inlet (47) and is connected to the at least one overflow chamber (44), the measuring chambers being separated from the collecting duct by an annular wall (45) extending from the bottom edge of the inlets (46) of the measuring chambers to the inlet of the at least one overflow chamber.

18. A cuvette rotor according to claim 1, characterised in that the at least one connecting path is a single collecting duct; the cuvette rotor has two parts, the first part (41) containing the analysis cuvettes (2) and the measuring chambers (6), and the second part containing the distribution chamber (42), the latter having a radial outermost top edge (48), the inlets (46) of the measuring chambers having a top and bottom edge and the inlet of the collecting duct having a top and bottom edge; and the second part can occupy two positions along the axis of rotation of the rotor with respect to the first part: (a) a first position in which the radially outremost top edge (48) of the distribution chamber is at a height situated between the heights of the top and bottom edges of the inlets (46) of the measuring chambers, and (b) a second position in which the above-mentioned edge of the distribution chamber is situated between the heights of the top and bottom edges of the inlet (47) of the collecting duct (43).

19. A cuvette rotor according to claim 17, characterised in that it has two parts, the first part (41) containing the analysis cuvettes (2) and the measuring chambers (6) and the second part containing the distribution chamber (42), and the second part is rotatable with respect to the first part.

**Revendications**

1. Rotor à cuvettes pour un appareil d'analyse, ledit rotor comprenant une chambre de distribution centrale (3), un nombre de cuvettes d'analyse (2) disposées en cercle à sa périphérie, pour chaque cuvette d'analyse une cavité de dosage (6), laquelle se situe entre le bord extérieur de la chambre de distribution et la cuvette qui lui correspond et comporte une entrée (8, 46) qui la relie à la chambre de distribution et une sorte qui la relie à la cuvette qui lui correspond par un passage de transfert (9), au moins un réservoir de trop-plein (14, 44), qui est relié a la chambre de distribution par au moins un passage de communication (10, 12, 13, 43), l'entrée (8, 46) de chaque cavité de dosage présentant une résistance d'écoulement hydraulique qui est plus faible que la résistance d'écoulement hydraulique du passage de communication, caractérisé en ce que les passages de transfert (9), les cuvettes (2) et le passage de communication existant au moins en un exemplaire (10, 12, 13, 43) ont une forme et une disposition telles que l'écoulement du liquide dans les cuvettes n'est possible que si la force centrifuge agissant sur le liquide lors de la rotation du rotor est supérieure a une valeur de seuil prédéterminée.

2. Procédé d'utilisation du rotor à cuvettes se-

lon la revendication 1, dans lequel on introduit dans la chambre de distribution une quantité déterminée de liquide qui est supérieure au volume total de toutes les cavités de dosage, et en ce qu'on amène la vitesse de rotation du rotor a une première valeur à laquelle on confère au liquide une force centrifuge suffisante pour pousser le liquide dans les cavités de dosage dans le réservoir de trop-plein, caractérisé en ce qu'on amène la vitesse de rotation à une seconde valeur, supérieure, à laquelle on confère au liquide une force centrifuge qui est supérieure à la valeur de seuil prédéterminée, les quantités de liquide qui sont contenues dans les cavités de dosage s'écoulant dans les cuvettes qui leur correspondent.

3. Rotor à cuvettes selon la revendication 1, caractérisé en ce que les cavités de dosage (6) voisines sont separées les unes des autres par des parois qui forment des arêtes (7), lesquelles sont disposées en un cercle qui est concentrique à l'axe de rotation du rotor.

4. Rotor à cuvettes selon la revendication 1, caractérisé en ce que le réservoir de trop-plein existant en au moins un exemplaire est formé par un grand nombre de cavités (14) qui se situent à chaque fois entre deux cavités de dosage (6) voisines, en ce que le passage de communication existant en au moins un exemplaire est formé par un collecteur annulaire (12) dont le fond présente des ouvertures (13) aboutissant aux cavités, et une paroi annulaire (10) qui recouvre les cavités de dosage et s'étand du bord supérieur de leurs ouvertures d'entrée au collecteur annulaire.

5. Rotor à cuvettes selon la revendication 4, caractérisé en ce que la paroi annulaire (10) a une face supérieure formant avec le bord supérieur des ouvertures d'entrée des cavités de dosage (6) une arête (11).

6. Rotor à cuvettes selon la revendication 1, caractérisé en ce que chaque passage de transfert (9) est un conduit tubulaire qui produit par ses dimensions des forces capillaires dans le liquide, qui sont aptes à créer la cohésion nécessaire à la formation d'un ménisque à son extrémité, débouchant dans la cuvette correspondant au passage de transfert, et en ce que grâce à la formation d'un tel ménisque et à la conformation des cuvettes d'analyse un volume d'air peut être emprisonné dans chaque cuvette.

7. Rotor à cuvettes selon la revendication 6, caractérisé en ce que les passages de transfert (9) débouchent dans une paroi de la cuvette (2) correspondante et à distance des faces supérieures et inférieures de cette cuvette, ladite paroi étant disposée essentiellement parallèlement à l'axe de rotation du rotor.

8. Rotor à cuvettes selon la revendication 1, caractérisé en ce que le réservoir de trop-plein (17) existant en au moins un exemplaire est disposé entre deux cuvettes (2) et possède une paroi supérieure qui a une ouverture d'aération (21) et en ce que le passage de communication existant en au moins un exemplaire est un canal (18).

9. Rotor à cuvettes selon la revendication 8, caractérisé en ce qu'il contient deux reservoirs de trop-plein (17) situés l'un en face de l'autre et chacun d'eux relié à la chambre de distribution (3) par un canal (18).

10. Rotor à cuvettes selon la revendication 3, caractérisé en ce que les parois internes supérieure et inférieure du rotor forment des rainures circulaires (23) adjacentes aux arêtes (7).

11. Rotor à cuvettes selon la revendication 10, caractérisé en ce la rainure (23) de la paroi interne inférieure du rotor est interrompue par des nervures (24) situées des deux côtés du canal (18) et s'étendant à l'intérieur du cercle délimité par la rainure.

12. Rotor à cuvettes selon la revendication 1, caractérisé en ce que le réservoir de trop-plein (17) existant en au moins un exemplaire est disposé entre deux cuvettes et en ce que pour chaque réservoir de trop-plein est prévue à une ouverture d'aération (21) dans une chambre annexe (20) qui est reliée latéralement au réservoir de trop-plein (17) existant en au moins un exemplaire, l'ouverture d'aération étant prévue dans la paroi supérieure de la chambre annexe.

13. Rotor à cuvettes selon la revendication 1, caractérisé en ce que chaque cavité de dosage (6) a un coin où débouche le passage de transfert (9) correspondant, et qui forme un angle inférieur à 180° et dont l'axe de symétrie coïncide approximativement avec un rayon passant par l'extrémité du passage de transfert avoisinant la cavité de dosage.

14. Rotor à cuvettes selon la revendication 1, caractérisé en ce que les cuvettes d'analyse ont une paroi inférieure et une paroi supérieure parallèles entre elles et en ce que les cuvettes ont des parois latérales perpendiculaires auxdites parois, l'intervalle entre les parois latérales diminuant avec l'éloignement du centre du rotor.

15. Rotor à cuvettes selon la revendication 1, caractérisé en ce que les entrées (8) se trouvent à un niveau supérieur à celui du fond de la chambre de distribution (3) et à celui du fond des cavités de dosage (6).

16. Rotor à cuvettes selon la revendication 1, caractérisé en ce que chacune des cuvettes d'analyse possède une ouverture (35) qui peut être fermée avec un organe d'obturation (36) pouvant être enlevé de l'extérieur du rotor.

17. Rotor à cuvettes selon la revendication 1, caractérisé en ce que le passage de communication existant en au moins un exemplaire est formé par un collecteur annulaire (43) situé en-dessous des cavités de dosage (6), qui a une entrée (47) et est relié à un réservoir de trop-plein (44) existant en au moins un exemplaire, où les cavités de dosage sont séparées du collecteur annulaire par une paroi annulaire (45) qui s'étend du bord inférieur des ouvertures d'entrée (46) des cavités de dosage jusqu'à l'ouverture d'entrée du réservoir de trop-plein existant en au moins un exemplaire.

18. Rotor à cuvettes selon la revendication 1, caractérisé en ce que le passage de communication existant en au moins une exemplaire est un canal collecteur unique, en ce que le rotor à cuvettes possède deux parties, la première partie (41) contenant les cuvettes d'analyse (2) et les cavités de dosage (6), et la seconde partie contenant la chambre de distribution (42), la chambre de distribution présentant un bord superieur radialement le plus externe (48), les ouvertures d'entrée (46) des cavités de dosage présentant un bord supérieur et un bord inférieur et l'ouverture d'entrée du canal collecteur présentant un bord supérieur et un bord inférieur, et en ce que la second partie peut prendre par rapport à la première partie deux positions le long de l'axe de rotation du rotor: une première position, où la bord supérieur radialement le plus externe (48) de la chambre de distribution se trouve à une hauteur située entre la hauteur du bord supérieur et la hauteur du bord inférieur des ouvertures d'entrée (46) des cavités de dosage, et une seconde position, où le bord mentionné ci-dessus de la chambre de distribution se situe entre la hauteur du bord supérieur et la hauteur du bord inférieur de l'ouverture d'entrée (47) du collecteur (43).

19. Rotor à cuvettes selon la revendication 17, caractérisé en ce qu'il possède deux parties, où la première partie (41) contient les cuvettes d'analyse (2) et les cavités de dosage (6), et la seconde partie contient la chambre de distribution (42), et en ce que la seconde partie peut tourner par rapport à la première partie.

# FIG. 2

# FIG. 1

# FIG. 4

# FIG. 3

FIG. 5

FIG. 7

FIG. 6

FIG. 8

**FIG. 9**

**FIG. 10**